Europäisches Patentamt

European Patent Office

Office européen des brevets

(11) Veröffentlichungsnummer : **0 355 324 B1**

(19)

(12) **EUROPÄISCHE PATENTSCHRIFT**

(45) Veröffentlichungstag der Patentschrift :
**22.04.92 Patentblatt 92/17**

(51) Int. Cl.⁵ : **B60T 8/44**

(21) Anmeldenummer : **89111717.8**

(22) Anmeldetag : **28.06.89**

(54) Bremsverstärker für eine blockiergeschützte hydraulische Bremsanlage.

(30) Priorität : **20.08.88 DE 3828377**

(43) Veröffentlichungstag der Anmeldung :
**28.02.90 Patentblatt 90/09**

(45) Bekanntmachung des Hinweises auf die
Patenterteilung :
**22.04.92 Patentblatt 92/17**

(84) Benannte Vertragsstaaten :
**DE FR GB IT SE**

(56) Entgegenhaltungen :
**DE-A- 3 625 146**
**DE-A- 3 636 537**
**DE-A- 3 806 227**
**DE-B- 2 450 874**
**FR-A- 2 116 559**
**GB-A- 2 083 581**

(73) Patentinhaber : **WABCO Westinghouse**
**Fahrzeugbremsen GmbH**
**Am Lindener Hafen 21 Postfach 91 12 80**
**W-3000 Hannover 91 (DE)**

(72) Erfinder : **Altmeppen, Johann**
**Schulstrasse 12**
**W-3013 Barsinghausen (DE)**
Erfinder : **Hölscher, Hermann**
**Gartenallee 20**
**W-3000 Hannover 91 (DE)**

(74) Vertreter : **Schrödter, Manfred**
**WABCO Westinghouse Fahrzeugbremsen**
**GmbH Am Lindener Hafen 21 Postfach 91 12**
**80**
**W-3000 Hannover 91 (DE)**

**Beschreibung**

Die Erfindung betrifft einen Bremsverstärker für eine blockiergeschützte hydraulische Bremsanlage nach dem Oberbegriff des Patentanspruchs 1.

Es ist üblich, bei einer Bremsanlage der in dem Oberbegriff des Patentanspruchs 1 vorkommenden Art den Hauptzylinder und die mit ihm verbundenen bzw. verbindbaren Anlagenteile als "statischen Kreis" und die Verstärkerventileinrichtung sowie die mit dieser verbundenen bzw. verbindbaren Anlagenteile als "dynamischen Kreis" zu bezeichnen.

Ein Bremsverstärker der eingangs genannten Art ist aus der DE 24 50 874 B2 bekannt. In dieser sind der Hauptzylinder und die Verstärkerventileinrichtung als eine Baueinheit dargestellt. Der Servozylinder ist in dieser Schrift auf eine Servoeinrichtung und einen Abgabezylinder aufgeteilt. Die Kolbeneinheit des Servozylinders setzt sich dabei aus einem Kolben der Servoeinrichtung und einem Kolben des Abgabezylinders zusammen. Der dort in der Bremskammer des Servozylinders erzeugte Bremsdruck für die Radbremszylinder besteht aus einem von dem statischen Steuerdruck über die erste Steuerfläche (linke Fläche des Kolbens des Abgabezylinders) erzeugten Anteil und einem von dem dynamischen Druck über die zweite Steuerfläche (linke Fläche des Kolbens der Servoeinrichtung) erzeugten Anteil. Bei diesem Bremsverstärker nimmt im Normalbetrieb, d.h. bei nicht wirksamer Blockierschutzanlage, nachstehend ABS, das Volumen der von der ersten Steuerfläche begrenzten ersten Steuerkammer des Servozylinders mit steigender Betätigungskraft am Hauptzylinder zu. Der dadurch verursachte Hub des Betätigungsorgans, in der Regel ein Bremspedal, vermittelt dem Fahrzeugführer eine Rückwirkung der Bremsanlage und damit das gewohnte Bremsbetätigungs-Gefühl.

Da bei dem Bremsverstärker nach der DE 24 50 874 B2 das ABS über eine ihm zugeordnete elektrisch betätigbare Ventileinrichtung (dort 17, 17 a) nur am dynamischen Steuerdruck angreift, wäre ohne zusätzliche Maßnahmen auch nur der von diesem Steuerdruck erzeugte Anteil des Bremsdrucks im ABS-Betrieb wegregelbar; der von dem statischen Druck erzeugte Anteil des Bremsdrucks würde also den Regelbereich des ABS nach unten begrenzen. Zur Vermeidung dieses Nachteils ist in der Verbindung zwischen dem Ausgang des Hauptzylinders und der ersten Steuerkammer des Servozylinders ein Trennventil (dort 19) angeordnet, welches zu Beginn eines ABS-Betriebs in Trennstellung geschaltet wird. Dabei wird die erste Steuerkammer von dem Hauptzylinder getrennt und an den Nachlaufbehälter angeschlossenen. Dadurch wird die untere Begrenzung des Regelbereichs de ABS beseitigt. Wegen des erwähnten Anschlusses der ersten Steuerkammer an den Nachlaufbehälter ist der statische Kreis "offen", was als sicherheitstechnischer Nachteil anzusehen ist.

Der Erfindung liegt deshalb die Aufgabe zugrunde, mit einfachen Mitteln einen Bremsverstärker der eingangs genannten Art mit einem "geschlossenen" statischen Kreis zu schaffen, d.h. mit einem solchen statischen Kreis, in dem bei wenigstens einem Wechsel zwischen ABS-Betrieb und Normalbetrieb während einer Bremsbetätigung ein Anschluß der ersten Steuerkammer an den Nachlaufbehälter nicht stattfindet.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung bietet auch den Vorteil, daß das beim Stand der Technik nach der DE 24 50 874 B2 erforderliche Trennventil entfallen kann. Dadurch ist eine erhebliche Verbilligung des Bremsverstärkers bzw. der Bremsanlage möglich. Außerdem ist dadurch eine mögliche Quelle für Betriebsstörungen beseitigt.

Der von dem statischen Steuerdruck erzeugte Anteil des Bremsdrucks fällt beim Stand der Technik nach der DE 24 50 874 B2 durch die Betätigung des Trennventils zu Beginn eines Blockierschutzbetriebs schlagartig aus und setzt bei Rückkehr zum Normalbetrieb schlagartig wieder ein. Die Erfindung bietet auch den Vorteil, daß sie die dadurch hervorgerufenen "ABS-Bremsdrucksprünge" vermeidet und so ein stetigeres Bremsverhalten der Bremsanlage gewährleistet.

Weitere Vorteile der Erfindung werden in deren folgender Erläuterung anhand von in Zeichnungen dargestellten Ausführungsbeispielen genannt. In den Zeichnungen werden für Bestandteile mit gleichen Funktionen durchgehend gleiche Bezugszeichen, für Druckmittelverbindungen durchgehende Linien und für elektrische Verbindungen strichpunktierte Linien verwendet.

Es zeigen:

Fig. 1 schematisch einen erfindungsgemäßen Bremsverstärker in einer blockiergeschützten hydraulischen Bremsanlage,

Fig. 2 vergrößert einen Servozylinder aus Fig. 1,

Fig. 3 einen Servozylinder mit integrierter Absperreinrichtung,

Fig. 4 eine Ausgestaltung des Servozylinders mit aus zwei Kolben bestehender Kolbeneinheit,

Fig. 5 eine andere Ausgestaltung des Servozylinders nach Fig. 4,

Fig. 6 eine andere Ausgestaltung des Servozylinders.

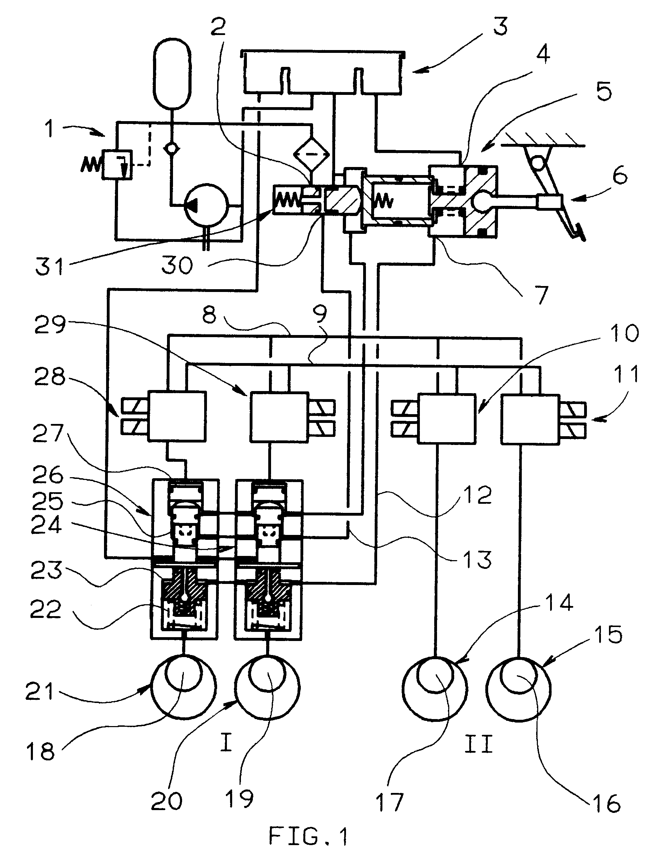

In Fig. 1 ist ein Bremsverstärker (5, 24, 26, 31) in einer blockiergeschützten hydraulischen Bremsanlage angeordnet, die außer aus dem Bremsverstärker (5, 24, 26, 31) aus einem Betätigungsorgan, nachstehend als Bremspedal (6) angenommen, einer Druckquelle (1), einem Nachlaufbehälter (3), Radbremsen (14, 15; 20, 21) mit Radbremszylindern (16, 17, 18, 19), einer Blockierschutzanlage, nachstehend ABS, von der nur elektrisch betätigbare Ventileinrichtungen (10, 11; 28, 29), nachstehend ABS-Ventil(e) dargestellt sind, und zugehörigen hydraulischen und elektrischen Verbindungen besteht.

Die generell mit (1) bezeichnete Druckquelle besteht in bekannter und daher nicht näher beschriebener Weise aus einem Druckerzeuger, einem Speicher und einer Druckregeleinrichtung, kann aber auch ohne Speicher ausgeführt sein. Die Druckregeleinrichtung stellt den Druck der Druckquelle, eventuell mit einer Regelspanne, auf Versorgungsdruck ein.

Der Bremsverstärker (5, 24, 26, 31) besteht aus einem Hauptzylinder (5), einer Verstärkerventileinrichtung (31) und zwei Servozylindern (24, 26). Der Hauptzylinder (5) und die Verstärkerventileinrichtung (31) sind zu einer Baueinheit zusammengefaßt, können aber auch bei Gewährleistung ihrer im folgenden näher beschriebenen Funktionen getrennt ausgeführt werden.

Der Hauptzylinder ist über einen Einlaß (4) mit dem Nachlaufbehälter (3) verbunden. Er ist in bekannter Weise aufgebaut und gibt bei Betätigung der Bremsanlage über das Bremspedal (6) an einem Auslaß (7) einen von der zugeführten Betätigungskraft abhängigen statischen Steuerdruck ab. Die Verstärkerventileinrichtung (31) weist einen mit der Druckquelle (1) verbundenen Einlaß (2) und einen Auslaß (30) auf. Die Verstärkerventileinrichtung (31) ist ebenfalls in bekannter Weise aufgebaut. Sie ist durch den statischen Steuerdruck steuerbar und gibt an ihrem Auslaß (30) aus der Druckquelle (1) einen dynamischen Steuerdruck ab, der bis zur Höhe des Versorgungsdrucks in einem festen Übersetzungsverhältnis zum statischen Steuerdruck steht. Dies wird in bekannter Weise durch ein Flächenverhältnis von Kolben bewirkt.

Die Radbremsen (20, 21) und die zugehörigen Radbremszylinder (19 bzw. 18) sind an einer Achse (I), die Radbremsen (16, 17) und die zugeordneten Radbremszylinder (15 bzw. 14) sind an einer anderen Achse (II) angeordnet. Jeder Radbremse (16, 17, 20, 21) ist ein eigenes ABS-Ventil (11 bzw. 10 bzw. 29 bzw. 28) zugeordnet. Die ABS-Ventile sind so in der Anlage angeordnet und in bekannter Weise aufgebaut, daß sie je nach elektrischer Ansteuerung die stromabwärts von ihnen gelegenen Anlagenteile mit dem Auslaß (30) der Verstärkerventileinrichtung (31) oder mit dem Nachlaufbehälter (3) verbinden.

Die im folgenden nicht weiter betrachteten Radbremszylinder (14, 15) der Achse (II) sind über das jeweilige ABS-Ventil (10 bzw. 11) direkt mit dem Anschluß (30) der Verstärkerventileinrichtung (31) verbindbar, liegen also ausschließlich im dynamischen Kreis. Demgegenüber sind an der üblicherweise als Vorderachse dienenden Achse (I) zwischen den Radbremszylindern (18, 19) und dem jeweiligen ABS-Ventil (28 bzw. 29) die Servozylinder (26 bzw. 24) angeordnet.

Die Servozylinder (24, 26) sind einander identisch, so daß die folgende Beschreibung des Servozylinders (26) für den Servozylinder (24) mitgilt.

Der Servozylinder (26) weist eine erste Steuerkammer (23), eine zweite Steuerkammer (27), eine Bremskammer (22) und eine Ausgleichkammer (25) auf. Die erste Steuerkammer (23) ist über eine Druckmittelverbindung (12) mit dem Auslaß (7) des Hauptzylinders (5) verbunden. Die zweite Steuerkammer (27) ist über das zugeordnete ABS-Ventil (28) und Druckmittelverbindungen (8 bzw. 9) mit dem Auslaß (30) der Ventileinrichtung (31) oder mit dem Nachlaufbehälter (3) verbindbar, stellt also den stromabwärts des ABS-Ventils (28) gelegenen Anlagenteil dar. Die Bremskammer (22) ist mit dem zugeordneten Radbremszylinder (18) verbunden, während die Ausgleichkammer (25) über eine Druckmittelverbindung (13) mit dem Auslaß (30) der Verstärkerventileinrichtung (31) verbunden ist.

In nicht näher beschriebener Weise sind, soweit erforderlich, zwischen den genannten Kammern Leckkammern angeordnet, die, wie aus den zugeordneten Druckmittelverbindungen hervorgeht, mit dem Nachlaufbehälter (3) verbunden sind.

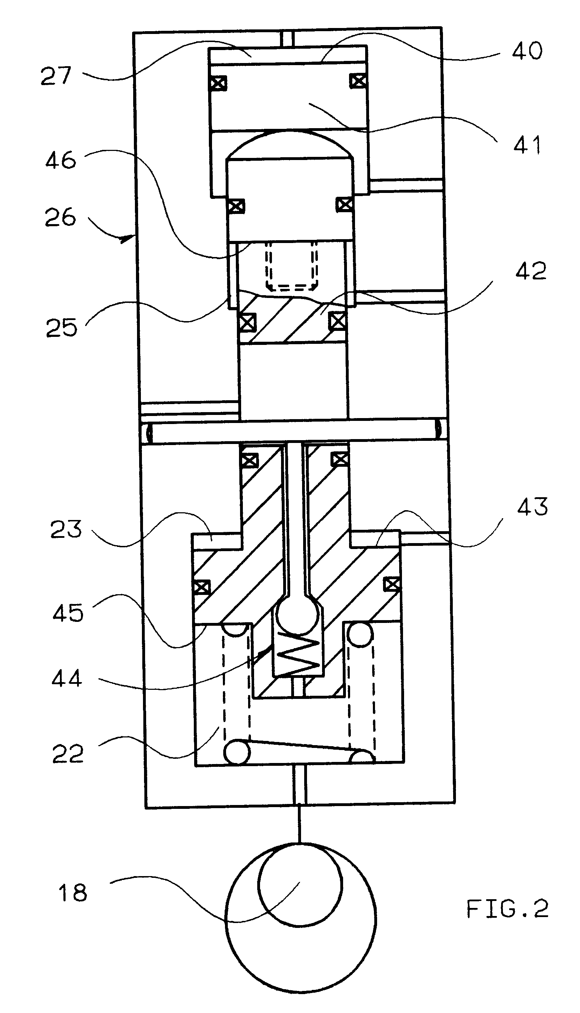

Wie Fig. 2 im einzelnen zeigt, ist in dem Servozylinder (26) eine Kolbeneinheit (41, 42) verschiebbar abgedichtet geführt, die einerseits mit einer ersten Steuerfläche (43) und einer zweiten Steuerfläche (40) die erste Steuerkammer (23) bzw. die zweite Steuerkammer (27) und andererseits, d. h. in entgegengesetzter Kraftrichtung, mit einer Reaktionsfläche (45) die Arbeitskammer (22) und mit einer Ausgleichfläche (46) die Ausgleichkammer (25) begrenzt. Die Kolbeneinheit (41, 42) ist stufig ausgeführt, wobei die erste Steuerfläche (43) sowie die Ausgleichfläche (46) Stufen- oder Ringflächen und die zweite Steuerfläche (40) sowie die Reaktionsfläche (45) die äußeren Endflächen bilden. Auch alle anderen geeigneten Flächenanordnungen sind möglich.

Aus Fig. 2 geht noch hervor, daß in der Kolbeneinheit (41, 42) ein Nachlaufventil (44) vorgesehen ist, welches, wie aus der zugeordneten Druckmittelverbindung der Fig. 1 hervorgeht, in bekannter Weise bei nicht betätigter Bremsanlage im Zusammenspiel mit einer nicht näher bezeichneten Rückstellfeder der Kolbeneinheit (41, 42) die Bremskammer (22) und damit den Radbremszylinder (18) mit dem Nachlaufbehälter (3) verbindet.

Für die folgende Funktionsbeschreibung sei zunächst angenommen, daß die Größe der Ausgleichfläche (46) sich zur Größe der ersten Steuerfläche (43) wie der Kehrwert des Übersetzungsverhältnises des dynamischen Steuerdrucks zum statischen Steuerdruck verhält.

Bei intakter Bremsanlage werden in Normalbetrieb bei Betätigung der Bremsanlage mittels des Bremspedals (6) in einer Kraftrichtung die erste Steuerfläche (43) mit dem statischen Steuerdruck und die zweite Steuerfläche (40) mit dem dynamischen Steuerdruck beaufschlagt. Da gleichzeitig die Ausgleichfläche (46) in entgegengesetzter Kraftrichtung mit dem dynamischen Druck beaufschlagt wird, wird die vom statischen Druck auf die Kolbeneinheit (41, 42) ausgeübte Kraft ausgeglichen. Der auf die zweite Steuerfläche (40) wirkende dynamische Druck erzeugt in der Bremskammer (22) und damit im Radbremszylinder (18) einen Bremsdruck, der über die Reaktionsfläche (45) die Kolbeneinheit (41, 42) gegen den dynamischen Druck ins Gleichgewicht bringt. Aufgrund der Elastizität der Radbremse (21), des Radbremszylinders (18) und der zu diesem führenden Druckmittelverbindung wandert die Kolbeneinheit (41, 42) bei der Bremsbetätigung in die Bremskammer (22) hinein. Infolge der dadurch verursachten Vergrößerung der ersten Steuerkammer (23) machen auch der Hauptzylinderkolben und damit das Bremspedal (6) Hub; die aus dem Stand der Technik bekannte Rückwirkung der Bremsanlage bleibt also erhalten. Entsprechendes gilt im Fall einer Erhöhung der Betätigungskraft während einer Bremsbetätigung.

Setzt jetzt ein ABS-Betrieb ein, so bleibt die Ausgeglichenheit der Kolbeneinheit (41, 42) gegenüber dem statischen Druck davon unberührt. Der statische Steuerdruck in der ersten Steuerkammer (23) bleibt also erhalten: Der statische Kreis bleibt "geschlossen". Die Aufrechterhaltung der genannten Ausgeglichenheit hat ferner zur Folge, daß der vor dem ABS-Betrieb auf die zweite Steuerfläche (40) wirkende dynamische Druck und damit der Bremsdruck über das ABS-Ventil (28) ohne die aus dem Stand der Technik bekannten "ABS-Drucksprünge" feinfühlig auf jeden Wert einschließlich Null gemindert und bis zum Ausgangswert wieder angehoben werden kann.

Da sich bei dem erfindungsgemäßen Bremsverstärker der statische Steuerdruck an der Bremsdruckerzeugung nicht beteiligt, ändert sich bei ihm im Vergleich zum eingangs erwähnten gattungsbildenden Bremsverstärker die Zuordnung von Betätigungskraft und Bremsdruck. Es versteht sich, daß zur Aufrechterhaltung der bekannten Zuordnung von Betätigungskraft und Bremsdruck geeignete Maßnahmen wie beispielsweise eine Abstimmung der Flächen (und Kammervolumina) in Servozylinder (26) und/oder Hauptzylinder (5) erforderlich sind.

Im Falle einer Bremsbetätigung bei ausgefallenem dynamischen Kreis wird die Kolbeneinheit (41, 42) gegenüber dem statischen Steuerdruck nicht ausgeglichen. Der statische Steuerdruck erzeugt dann einen Bremsdruck, der entsprechend dem Verhältnis der ersten Steuerfläche (43) zur Reaktionsfläche (45) gegenüber dem statischen Steuerdruck untersetzt ist und mit dem eine Hilfsbremswirkung sichergestellt sein muß. In diesem Falle ist ein ABS-Betrieb nicht möglich.

Im Falle einer Bremsbetätigung bei ausgefallenem statischen Kreis wird die Verstärkerventileinrichtung (31) direkt durch die Betätigungskraft gesteuert. Der dynamische Kreis bleibt dabei voll funktionsfähig, allerdings wird der jetzt erzielbare Bremsdruck nach Maßgabe des Verhältnisses der Ausgleichfläche (46) zur zweiten Steuerfläche (40) gemindert. Hilfsbremswirkung kann auch in diesem Falle sichergestellt werden, insbesondere da ja die Radbremsen (14, 15) der Achse (II) voll funktionsfähig bleiben. Die Bremsanlage bleibt in diesem Falle ABS-funktionsfähig.

Bei dem der Funktionsbeschreibung bisher zugrundegelegten Flächenverhältnis zwischen Ausgleichfläche und erster Steuerfläche geht die beschriebene Ausgeglichenheit der Kolbeneinheit (41, 42) gegenüber dem statischen Druck verloren, wenn bei ausgesteuerter Verstärkerventileinrichtung (31), (d. h. bei Gleichheit zwischen dynamischen Steuerdruck und Versorgungsdruck) die Betätigungskraft weiter gesteigert wird. In diesem Fall wird eine Erhöhung des Bremsdrucks nur durch den nicht ausgeglichenen Teil des statischen Steuerdrucks erbracht. Diese Erhöhung stellt einen von dem statischen Steuerdruck erzeugten Anteil des Bremsdruckes dar. Dieser Anteil begrenzt beim Einsetzen eines ABS-Betriebs den Regelbereich des ABS nach unten. Dieser Nachteil kann durch Vergrößerung des Verhältnisses der Größe der Ausgleichfläche (45) zur Größe der ersten Steuerfläche (43) gemindert werden. Ganz vermieden werden kann dieser Nachteil, indem die Ausgleichfläche (46) und/oder die erste Steuerfläche (43) so ausgelegt werden, daß die Größe der Ausgleichfläche (46) sich zur Größe der zweiten Steuerfläche (43) wie der höchste zu erwartende statische Steuerdruck (das ist der bei größter zu erwartender Betätigungskraft vorhandene ) zum Versorgungsdruck verhält. Es versteht sich, daß auch eine solche Maßnahme zur Aufrechterhaltung der Zuordnung von Betätigungskraft und Bremsdruck geeignete Schritte, beispielsweise eine Abstimmung der Flächen (und Kammervolumina) in Servozylinder (26) und/oder Hauptzylinder (5), erforderlich macht.

Es liegt auf der Hand, daß das vorstehend beschriebene Wirken und Zusammenwirken der Anlagenteile unabhängig von der Zahl der eingesetzten Servozylinder abläuft. Vorbehaltlich anderer Gesichtspunkte zur Aufteilung der Bremsanlage auf die Achsen könnten für jede vorhandene Radbremse ein eigener Servozylinder oder für alle vorhandenen Radbremsen ein gemeinsamer Servozylinder oder für die Radbremsen einer und-/oder beider Achsen jeweils ein Servozylinder vorgesehen werden.

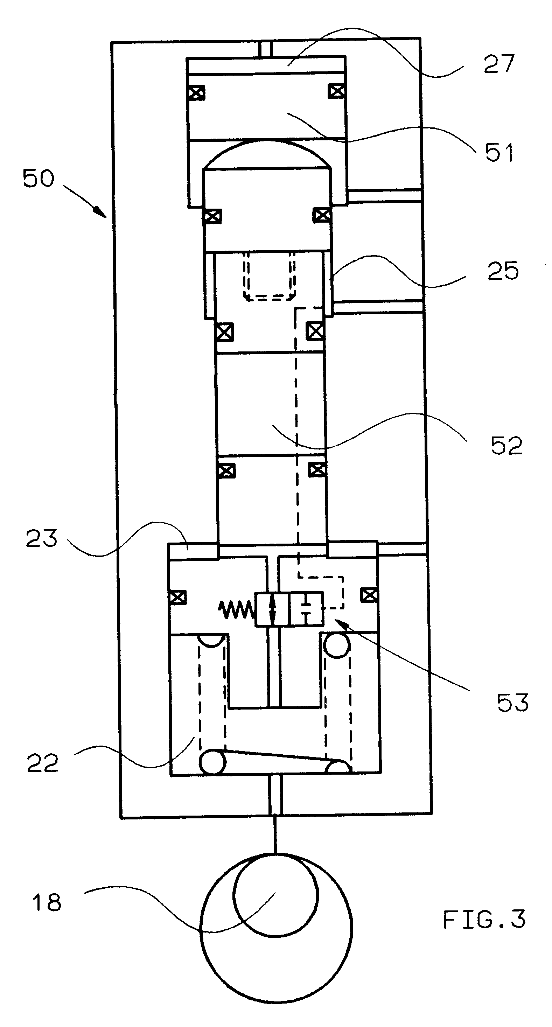

In Fig. 3 ist ein Servozylinder (50) dargestellt, der sich von dem bisher beschriebenen Servozylinder durch eine integrierte Absperreinrichtung (53) unterscheidet, die bei unbetätigter Bremsanlage und/oder bei Ausfall des dynamischen Steuerdrucks die erste Steuerkammer (23) und die Bremskammer (22) verbindet. Die Absperreinrichtung (53) ist in die hier mit (51, 52) bezeichnete Kolbeneinheit integriert. Die Absperreinrichtung (53) ist in einem in der Kolbeneinheit (51, 52) vorgesehenen Durchgang zwischen erster Steuerkammer (23) und Bremskammer (22) angeordnet. Sie ist druckgesteuert und über ein gestrichelt angedeutetes Bohrungssystem steuerseitig mit der Ausgleichkammer (25) verbunden. Bei vorhandenem dynamischen Steuerdruck sperrt die Absperreinrichtung (53) den Durchgang zwischen erster Steuerkammer (23) und Bremskammer (22). Bei fehlendem dynamischen Steuerdruck, d. h. bei unbetätigter Bremsanlage oder bei ausgefallenem dynamischen Kreis, öffnet die Absperreinrichtung (53) diesen Durchgang. Bei dieser Ausgestaltung werden die Bremskammer (22) und der Radbremszylinder (18) über den Hauptzylinder (5) aus dem Nachfüllbehälter (3) gefüllt, so daß sich die getrennte Verbindung der Bremskammer (22) mit dem Nachfüllbehälter (3) gemäß dem früheren Ausführungsbeispiel erübrigt.

Gegenüber dem früheren Ausführungsbeispiel bietet die Ausgestaltung nach Fig. 3 den Vorteil des "internen Übersetzungssprungs".Infolge der bei Ausfall des dynamischen Kreises offenen Verbindung zwischen Hauptzylinder (5) und Bremskammer (22) und damit Bremszylinder (18) ist der Bremsdruck nicht entsprechend dem Verhältnis der ersten Steuerfläche (43) zur Reaktionsfläche (45) gegenüber dem statischen Steuerdruck untersetzt, sondern der statische Steuerdruck steht in voller Höhe als Bremsdruck zur Verfügung.

Mit dieser Erhöhung des Bremsdrucks vergrößert sich das vom Hauptzylinder (5) zu liefernde Druckmittelvolumen und damit der Pedalhub. In grober Annäherung kann davon ausgegangen werden, daß sich der Pedalhub bei Ausfall des dynamischen Kreises zum Pedalhub bei intaktem dynamischen Kreis wie der Kehrwert des Verhältnisses der ersten Steuerfläche (43) zur Reaktionsfläche (45) verhält.

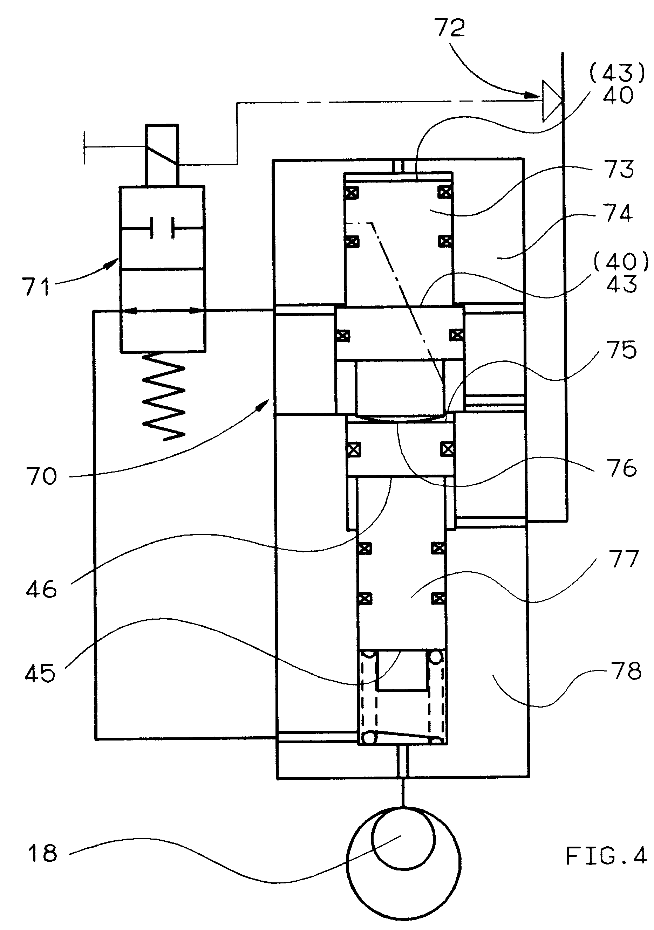

Bei dem in Fig. 4 dargestellten Servozylinder (70) besteht die Kolbeneinheit aus zwei in getrennten Gehäuseteilen (74 bzw. 78) angeordneten Kolben (73 bzw. 77), die an einander zugewandten Stirnseiten (76 bzw. 75) miteinander in Eingriff stehen. An dem einen Kolben (73) sind die erste Steuerfläche (43) und die zweite Steuerfläche (40) angeordnet, während an dem anderen Kolben (77) die Ausgleichfläche (46) und die Reaktionsfläche (45) angeordnet sind. In der Darstellung sind die erste Steuerfläche (43) als Stufen- oder Ringfläche und die zweite Steuerfläche (40) als Stirnfläche des Kolbens (73) gezeichnet. Es liegt aber auf der Hand, daß bei entsprechender Bemessung, die Lage der ersten und zweiten Steuerfläche, wie durch die in Klammern gesetzte Angabe der Bezugszeichen angedeutet ist, ausgetauscht werden können.

Diese Ausgestaltung bietet eine Lösung für eine erhebliche Fertigungsvereinfachung des Servozylinders (70) bei erhöhter Zuverlässigkeit. Jeder Kolben (73 bzw. 77) und sein zugeordnetes Gehäuseteil (74 bzw. 78) stellen fertigungstechnisch relativ einfache Teile dar und sind deshalb kostengünstig herstellbar. Als Folge der fertigungstechnischen Vereinfachung wird aber auch die Gefahr des Bauteilklemmens im Gehäuse minimiert. Dazu trägt auch eine erhaben ballige Ausbildung der dem Eingriff dienenden Stirnfläche (76) wenigstens des Kolbens (73) bei, die zu einer punktförmigen oder kleinflächigen Berührung unter Vermeidung der Übertragung von Querkräften zwischen den Kolben (73, 78) führt.

Diese Figur zeigt noch eine elektrisch steuerbare Absperreinrichtung (71). Diese ist als selbständige Baueinheit dargestellt, kann aber auch in den Servozylinder (70) integriert werden. Ihr elektrisches Steuersignal könnte die Absperreinrichtung (71) beispielsweise von einem durch (72) angedeuteten, den dynamischen Steuerdruck überwachenden Drucksensor erhalten. Die Gewinnung des elektrischen Steuersignals kann aber auch auf jede andere zweckdienliche Art erfolgen. Im Falle des erwähnten Austausches der Lage der Steuerflächen müßte der Eingang der Absperreinrichtung entsprechend geändert angeschlossen dargestellt werden.

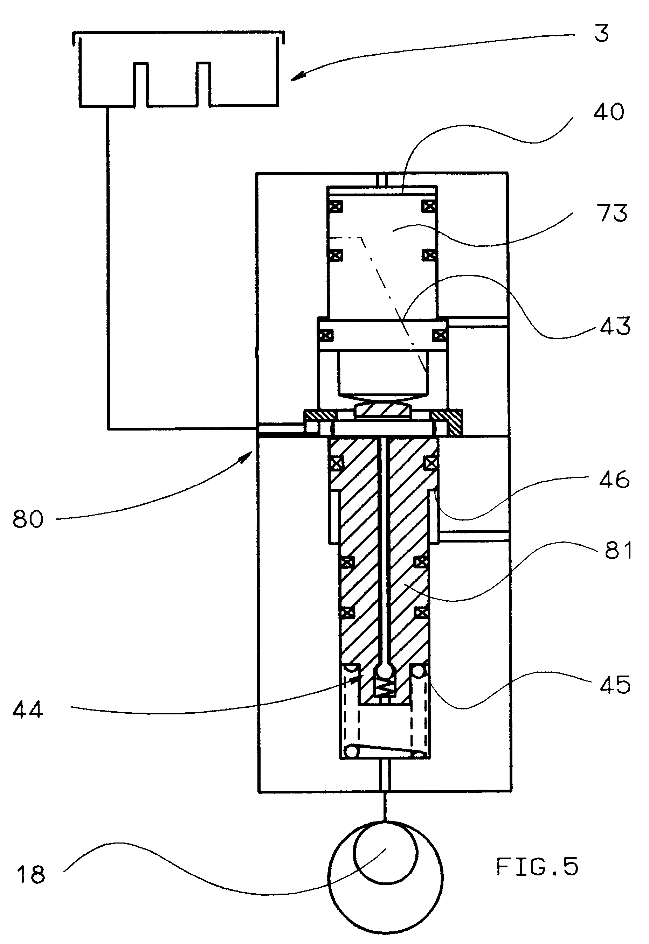

Fig. 5 zeigt eine generell mit (80) bezeichnete Ausgestaltung des Servozylinders nach Fig. 4. Diese unterscheidet sich von jenem im wesentlichen dadurch, daß sie ein Nachlaufventil aufweist, welches wie dasjenige des Servozylinders (26) nach Fig. 2 wirkt und deshalb dasselbe Bezugszeichen (44) trägt. Von der hier mit (73, 81) bezeichneten Kolbeneinheit ist der eine Kolben (73) mit dem entsprechenden Kolben des vorigen Ausführungsbeispiels identisch, während der andere Kolben (81) gegenüber dem entsprechenden Kolben des vorigen Ausführungsbeispiels durch das Nachlaufventil (44) bedingte Änderungen aufweist. Der interne Übersetzungssprung ist bei diesem Servozylinder nicht ausführbar.

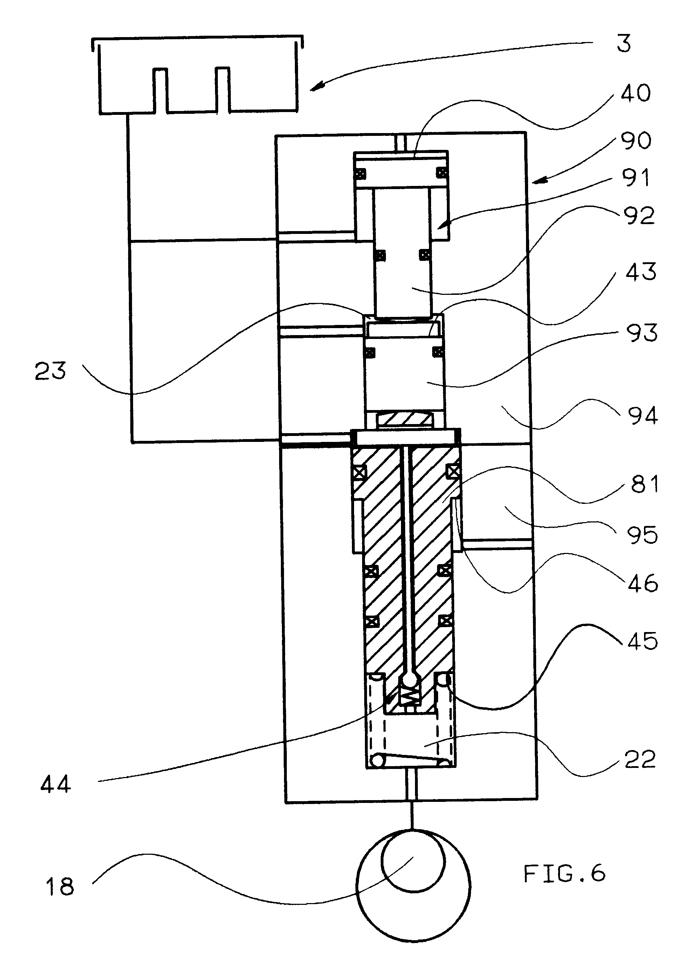

Fig. 6 zeigt einen generell mit (90) bezeichneten Servozylinder, der als Weiterentwicklung des vorigen Ausführungsbeispiels angesehen werden kann. Der eine Kolben ist hier auf einen die zweite Steuerfläche (40) tragenden Kolbenteil (91) und einen und einen die erste Steuerfläche (43) tragenden Kolbenteil (93) aufgeteilt, während der andere Kolben (81) im wesentlichen unverändert ist. Der Kolbenteil (93) ist zwischen dem Kolbenteil (91) und dem anderen Kolben (81) angeordnet, derart, daß er den am Kolbenteil (91) erzeugten Kraftüberschuß des dynamischen Steuerdrucks über den statischen Steuerdruck auf den anderen Kolben (81) überträgt. Zur Übertragung dieses Kraftüberschusses auf den Kolbenteil (93) dringt der Kolbenteil (91) mit einem Schaft (92) in die erste Steuerkammer (23) ein.

Die bei einer Bremsbetätigung vom Hauptzylinder zu erbringende Druckmittelvolumenlieferung und damit der Pedalhub sind bei intaktem dynamischen Kreis geringer als bei Ausfall des dynamischen Kreises. Das liegt daran, daß bei intaktem dynamischen Kreis das Volumen der ersten Steuerkammer (23) teilweise von dem Schaft (92) eingenommen wird, während bei Ausfall des dynamischen Kreises der Schaft (92) von dem statischen Steuerdruck bis zum Anschlag des Kolbenteils (91) am Gehäuse aus der ersten Steuerkammer (23) hinausgeschoben wird.

Der statische Steuerdruck wirkt hier außer auf die erste Steuerfläche (43) auch auf die Stirnfläche des in der ersten Steuerkammer (23) befindlichen Schafts (92). Dadurch wird der von dem dynamischen Steuerdruck über die zweite Steuerfläche (40) erzielbare Bremsdruck in der Bremskammer (22) gemindert. Deshalb kann als wirksame erste Steuerfläche bei intaktem dynamischen Kreis nur der Überschuß der ersten Steuerfläche (43) über die in der ersten Steuerkammer (23) befindliche Stirnfläche des Schafts (92) angesehen werden. Bei Ausfall des dynamischen Kreises hingegen steht die gesamte erste Steuerfläche (43) dem statischen Steuerdruck als wirksam zur Verfügung.

Die beschriebenen Änderungen der Druckmittelvolumenlieferung und des wirksamen Anteils der ersten Steuerfläche beim Ausfall des dynamischen Kreises wirken sich als interner Übersetzungssprung aus. Dieser interne Übersetzungssprung wird, anders als bei den Ausführungsbeispielen nach den Figuren 3 und 4, ohne Aufhebung der Trennung zwischen erster Steuerkammer (23) und Bremskammer (22) und damit Radbremszylinder (18) erzielt. Durch entsprechende Auslegung der ersten Steuerfläche (43) und/oder der Reaktionsfläche (45) kann deshalb hier durch den internen Übersetzungssprung sogar ein gegenüber dem statischen Steuerdruck übersetzter (d. h. höherer) Bremsdruck erzielt werden.

Ein weiterer Vorteil dieses Ausführungsbeispiels ist, daß es den internen Übersetzungssprung ohne eine verteuernde Absperreinrichtung bietet.

Zur Erzielung der beim Ausführungsbeispiel nach Fig. 4 genannten Vorteile können jedem der Kolbenteile (91 und 93) und der Kolben (81) oder beide Kolbenteile (91 und 93) zusammen und der Kolben (81) für sich in getrennten Gehäuseteilen, wie durch die Bezugszeichen (94 und 95) angedeutet, angeordnet sein.

Im übrigen gelten die vorstehend zu den einzelnen Ausführungsbeispielen gegebenen Erläuterungen für jedes andere Ausführungsbeispiel in entsprechender Weise, sofern sich für den Fachmann aus diesen Ausführungen nichts Widersprechendes ergibt.

Der Fachmann erkennt, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen.

**Patentansprüche**

1. Bremsverstärker für eine blockiergeschützte hydraulische Bremsanlage mit einem Hauptzylinder (5), einer Verstärkerventileinrichtung (31) und wenigstens einem Servozylinder (24, 26; 50; 70; 80; 90) mit den Merkmalen:

a) Der Hauptzylinder (5) gibt an seinem Auslaß (7) einen von der zugeführten Betätigungskraft abhängigen statischen Steuerdruck ab;

b) die Verstärkerventileinrichtung (31) weist einen mit einer einen Versorgungsdruck liefernden Druckquelle (1) verbundenen Einlaß (2) und einen Auslaß (30) auf;

c) die Verstärkerventileinrichtung (31) ist durch den statischen Steuerdruck steuerbar und gibt an dem Auslaß (30) aus der Druckquelle (1) einen dynamischen Steuerdruck ab, der bis zur Höhe des Versorgungsdrucks in einem festen Übersetzungsverhältnis zum statischen Steuerdruck steht;

d) der Servozylinder (24, 26; 50; 70; 80; 90) weist eine Kolbeneinheit (41, 42; 51, 52; 73, 77; 73, 81; 91, 93, 81) auf, an welcher einerseits eine eine erste Steuerkammer (23) begrenzende erste Steuerfläche (43) und eine eine zweite Steuerkammer (27) begrenzende zweite Steuerfläche (40) und andererseits eine eine mit wenigstens einem Teil der Radbremszylinder (14, 15, 18, 19) der Bremsanlage verbundene Bremskammer (22) begrenzende Reaktionsfläche (45) angeordnet sind;

e) die zweite Steuerkammer (27) ist über eine einer Blockierschutzanlage zugeordnete elektrisch betätigbare Ventileinrichtung (28, 29) mit dem Auslaß (30) der Verstärkerventileinrichtung (31) verbindbar, gekennzeichnet durch die Merkmale:

f) die erste Steuerkammer (23) ist mit dem Auslaß (7) des Hauptzylinders (5) direkt verbunden;

g) die Kolbeneinheit (41, 42; 51, 52; 73, 77; 73, 81; 91, 93, 81) des Servozylinders (24, 26; 50; 70; 80; 90) weist eine entgegengesetzt zu der ersten Steuerfläche (43) und der zweiten Steuerfläche (40) angeordnete, eine Ausgleichkammer (25) begrenzende, Ausgleichfläche (46) auf;

h) die Ausgleichkammer (25) ist mit dem Auslaß (30) der Verstärkerventileinrichtung (31) verbunden;

i) die Größe der Ausgleichfläche (46) verhält sich zur Größe der ersten Steuerfläche (43) wenigstens wie der Kehrwert des Übersetzungsverhältnises des dynamischen Steuerdrucks zum statischen Steuerdruck.

2. Bremsverstärker nach Anspruch 1, dadurch gekennzeichnet, daß die Größe der Ausgleichfläche (46) sich zur Größe der ersten Steuerfläche (43) wie der höchste zu erwartende statische Steuerdruck zum Versorgungsdruck verhält.

3. Bremsverstärker nach einem der vorhergehenden Ansprüche, gekennzeichnet durch die Merkmale:

a) die Kolbeneinheit (73, 77; 73, 81) des Servozylinders (70; 80) besteht aus zwei in getrennten Gehäuseteilen (74, 78) angeordneten und an einander zugewandten Stirnseiten (76, 75) miteinander in Eingriff stehenden Kolben (73 und 77; 73 und 81);

b) an dem einen Kolben (73) sind die erste Steuerfläche (43) und die zweite Steuerfläche (40) angeordnet;

c) an dem anderen Kolben (77; 81) sind die Ausgleichfläche (46) und die Reaktionsfläche (45) angeordnet.

4. Bremsverstärker nach einem der vorhergehenden Ansprüche, dadurch gekennzeichnet, daß eine Absperreinrichtung (53; 71) vorgesehen ist, die bei unbetätigter Bremsanlage und/oder bei Ausfall des dynamischen Steuerdrucks die erste Steuerkammer (23) und die Bremskammer (22) verbindet.

5. Bremsverstärker nach Anspruch 4, dadurch gekennzeichnet, daß die Absperreinrichtung (71) eine selbständige Baueinheit ist.

6. Bremsverstärker nach Anspruch 4, dadurch gekennzeichnet, daß die Absperreinrichtung (53) in den Servozylinder (50) integriert ist.

7. Bremsverstärker nach Anspruch 6, dadurch gekennzeichnet, daß die Absperreinrichtung (53) in die Kolbeneinheit (51, 52) integriert ist.

8. Bremsverstärker nach einem der Ansprüche 4 bis 7, dadurch gekennzeichnet, daß die Absperreinrichtung (53) vom dynamischen Steuerdruck steuerbar ist.

9. Bremsverstärker nach einem der Ansprüche 4 bis 7, dadurch gekennzeichnet, daß die Absperreinrichtung (71) elektrisch steuerbar ist.

10. Bremsverstärker nach einem der Ansprüche 1 bis 2, gekennzeichnet durch die Merkmale:

a) die Kolbeneinheit (91, 93, 81) ist auf einen die zweite Steuerfläche (40) tragenden Kolbenteil (91), einen die erste Steuerfläche (43) tragenden Kolbenteil (93) und einen die Reaktionsfläche (45) und die Ausgleichfläche (46) tragenden Kolben (81) aufgeteilt;

b) der Kolbenteil (93) ist zwischen dem Kolbenteil (91) und dem Kolben (81) angeordnet;

c) der Kolbenteil (93) weist einen Schaft (92) auf, mit dem er in die erste Steuerkammer (23) eindringt und in Eingriff mit dem Kolbenteil (93) bringbar ist.

11. Bremskraftverstärker nach Anspruch 10, dadurch gekennzeichnet, daß der Kolbenteil (91) und der Kolbenteil (93) in einem Gehäuseteil (94) und der Kolben (81) in einem getrennten Gehäuseteil (95) oder daß jeder der Kolbenteile (91 und 93) sowie der Kolben (81) für sich in einem getrennten Gehäuseteil angeordnet sind.

## Claims

1. Brake booster for an anti-lock hydraulic braking system with a master cylinder (5), a booster valve arrangement (31) and at least one servo cylinder (24, 26; 50; 70; 80; 90), having the features:

a) the master cylinder (5) supplies at its outlet (7) a static control pressure dependent on the actuating force applied;

b) the booster valve arrangement (31) has an inlet (2) connected to a pressure source (1) delivering a supply pressure, and an outlet (30);

c) the booster valve arrangement (31) is controllable by the static control pressure and delivers at the outlet (30) from the pressure source (1) a dynamic control pressure which up to the level of the supply pressure is in a fixed transmission ratio to the static control pressure;

d) the servo cylinder (24, 26; 50; 70; 80; 90) has a piston unit (41, 42; 51, 52; 73, 77; 73, 81; 91, 93, 81) on which there is arranged at one end a first control face (23) defining a first control chamber (23) and a second control face (40) defining a second control chamber (27) and at the other end a reaction face (45) defining a brake chamber (22) connected to at least a part of the wheel brake cylinder (14, 15, 18, 19) of the braking system;

e) the second control chamber (27) is arranged to be connected by way of an electrically operable valve arrangement (28, 29) associated with an anti-lock system to the outlet (30) of the booster valve arrangement (31),

characterized by the features:

f) the first control chamber (23) is directly connected to the outlet (7) of the master cylinder (5);

g) the piston unit (41, 42; 51, 52; 73, 77; 73, 81; 91, 93, 81) of the servo cylinder (24, 26; 50; 70; 80; 90) has an equalizing face (46) arranged oppositely to the first control face (43) and the second control face (40) and defining an equalizing chamber (25);

h) the equalizing chamber (25) is connected to the outlet (30) of the booster valve arrangement (31);

i) the size of the equalizing face (46) is to the size of the first control face (43) at least as the reciprocal value of the transmission ratio of the dynamic control pressure is to the static control pressure.

2. Brake booster according to claim 1, characterized in that the size of the equalizing face (46) is to the size of the first control face (43) as the highest static control pressure to be expected is to the supply pressure.

3. Brake booster according to one of the preceding claims, characterized by the features:

a) the piston unit (73, 77; 73, 81) of the servo cylinder (70; 80) consists of two pistons (73 and 77; 73 and 81) arranged in separate housing parts (74, 78) and engaging one another at facing end faces (76, 75);

b) the first control face (43) and the second control face are arranged on the one piston (73);

c) the equalizing face (46) and the reaction face (45) are arranged on the other piston (77; 81).

4. Brake booster according to one of the preceding claims, characterized in that a shut-off arrangement (53; 71) is provided which, when the braking system is not being actuated and/or when the dynamic control pressure fails, connects the first control chamber (23) and the brake chamber (22).

5. Brake booster according to claim 4, characterized in that the shut-off arrangement (71) is an independent unit.

6. Brake booster according to claim 4, characterized in that the shut-off arrangement (53) is integrated in the servo cylinder (50).

7. Brake booster according to claim 6, characterized in that the shut-off arrangement (53) is integrated in the piston unit (51, 52).

8. Brake booster according to one of claims 4 to 7, characterized in that the shut-off arrangement (53) is controllable by the dynamic pressure.

9. Brake booster according to one of claims 4 to 7, characterized in that the shut-off arrangement (71) is electrically controllable.

10. Brake booster according to one of claims 1 to 2, characterized by the features;

a) the piston unit (91, 93, 81) is divided into a piston part (91) bearing the second control face (40), a piston part (93) bearing the first control face (43) and a piston (81) bearing the reaction face (45) and the equalizing face (46);

b) the piston part (93) is arranged between the piston part (91) and the piston (81);

c) the piston part (93) has a shaft (92) with which it penetrates into the first control chamber (23) and is arranged to be brought into engagement with the piston part (93).

11. Brake booster according to claim 10, characterized in that the piston part (91) and the piston part (93) are arranged in a housing part (94) and the piston (81) is arranged in a separate housing part (95), or each of the piston parts (91 and 93) and the piston (81) are arranged individually in separate housing parts.


## Revendications

1. Amplificateur de freinage pour un système de freinage hydraulique antiblocage, comportant un cylindre principal (5), un dispositif amplificateur à vannes (31) et au moins un servocylindre (24, 26; 50; 70; 80; 90), présentant les attributs suivants:

a) le cylindre principal (5) fournit à sa sortie (7) une pression de commande statique qui est fonction de la force de manoeuvre exercée.

b) le dispositif amplificateur à vannes (31) présente une entrée (2) reliée à une source de pression (1) qui fournit la pression d'alimentation, ainsi qu'une sortie (30);

c) le dispositif amplificateur à vannes (31) peut être piloté par la pression de commande statique et fournit à la sortie (30), à partir de la source de pression (1), une pression de commande dynamique qui se tient dans un rapport de multiplication fixe par rapport à la pression de commande statique jusqu'à la valeur de la pression d'alimentation;

d) le servocylindre (24, 26; 50; 70; 80; 90) présente un ensemble formant piston (41, 42; 51, 52; 73, 77; 73, 81; 91, 93, 81) sur lequel se trouvent d'une part une première surface de commande (43) limitant une première chambre de commande (23) et une seconde surface de commande (40) limitant une seconde chambre de commande (27) et d'autre part une surface de réaction (45) limitant une chambre de commande (22) reliée avec au moins une partie des cylindres de frein de roue (14, 15, 18, 19) du système de freinage;

e) la seconde chambre de commande (27) peut être reliée, par l'intermédiaire d'un dispositif à vannes (28, 29) qui correspond à un système antiblocage et peut être manoeuvré électriquement, avec la sortie (30) du dispositif amplificateur à vannes (31), amplificateur

caractérisé par les attributs suivants:

f) la première chambre de commande (23) est directement reliée avec la sortie (7) du cylindre principal (5);

g) l'ensemble formant piston (41, 42; 51, 52; 73, 77; 73, 81; 91, 93, 81) du servocylindre (24, 26; 50; 70; 80; 90) présente une surface d'équilibrage (46) qui est disposée en face de la première surface de commande (43) et de la seconde surface de commande (40) et qui limite une chambre d'équilibrage (25);

h) la chambre d'équilibrage (25) est reliée avec la sortie (30) du dispositif amplificateur à vannes (31);

i) la dimension de la surface d'équilibrage (46) par rapport à la dimension de la première surface de commande (43) se trouve au moins dans le rapport inverse du rapport de multiplication de la pression de commande dynamique par rapport à la pression de commande statique.

2. Amplificateur de freinage selon la revendication 1, caractérisé par le fait que la dimension de la surface d'équilibrage (46) par rapport à la dimension de la première surface de commande (43) est dans le même rapport que la pression de commande statique la plus élevée à laquelle on peut s'attendre par rapport à la pression d'alimentation.

3. Amplificateur de freinage selon l'une des revendications précédentes,

caractérisé par les attributs suivants:

a) l'ensemble formant piston (73, 77; 73, 81) du servocylindre (70; 80) est constitué de deux pistons (73 et 77; 73 et 81) qui sont disposés dans des parties distinctes (74, 78) du carter et viennent en prise l'un avec l'autre par des surfaces frontales (76, 75) orientées l'une vers l'autre;

b) sur le premier piston (73) sont disposées la première surface de commande (43) et la seconde surface de commande (40);

c) sur l'autre piston (77; 81) sont disposées la surface d'équilibrage (46) et la surface de réaction (45).

4. Amplificateur de freinage selon l'une des réalisations précédentes, caractérisé par le fait qu'il est prévu un dispositif de verrouillage (53; 71) qui, dans le cas où l'on ne manoeuvre pas le système de freinage et/ou en cas de défaillance de la pression de commande dynamique, relie la première chambre de commande (23) et la chambre de freinage (22).

5. Amplificateur de freinage selon la revendication 4, caractérisé par le fait que le dispositif de verrouillage (71) est un ensemble autonome.

6. Amplificateur de freinage selon la revendication 4, caractérisé par le fait que le dispositif de verrouillage (53) est intégré dans le servocylindre (50).

7. Amplificateur de freinage selon la revendication 6, caractérisé par le fait que le dispositif de verrouillage (53) est intégré dans l'ensemble formant piston (51, 52).

8. Amplificateur de freinage selon l'une des revendications 4 à 7, caractérisé par le fait que le dispositif de verrouillage (53) peut être commandé par la pression de commande dynamique.

9. Amplificateur de freinage selon l'une des revendications 4 à 7, caractérisé par le fait que le dispositif de verrouillage (71) peut être-commandé électriquement.

10. Amplificateur de freinage selon l'une des revendications 1 à 2, caractérisé par les attributs suivants:

a) l'ensemble formant piston (91, 93, 81) est divisé en une partie de piston (91) qui porte la seconde surface de commande (40), une partie de piston (93) qui porte la première surface de commande (43) et un piston (81) qui porte la surface de réaction (45) et la surface d'équilibrage (46);

b) la partie (93) de piston est disposée entre la partie (91) de piston et le piston (81);

c) la partie (93) de piston présente une tige (92) par laquelle elle pénètre dans la première chambre de commande (23) et peut venir en prise avec la partie (93) du piston.

11. Amplificateur de la force de freinage selon la revendication 10, caractérisé par le fait que la partie (91) de piston et la partie (93) de piston sont disposées dans une partie (94) du carter et que le piston (81) est disposé dans une partie distincte (95) du carter, ou bien que chacune des parties (91 et 93) du piston, ainsi que le piston (81) sont disposés, chacun pour soi, dans une partie distincte du carter.

FIG.1

FIG.2

FIG.3

FIG.4

FIG.5

FIG.6